# EUROPEAN PATENT APPLICATION

(11) **EP 4 827 047 A1**
(43) Date of publication of application: **21.10.2026**
(21) Application number: 24911195.6
(22) Date of filing: 25.12.2024
(51) Int. Cl.: H04L 9/40

(54) **CROSS-DOMAIN ACCESS CONTROL METHOD BASED ON CLOUD MANAGEMENT PLATFORM, AND CLOUD MANAGEMENT PLATFORM**

(30) Priority: 26.12.2023 CN 202311824996; 29.03.2024 CN 202410381646
(71) Applicant: Huawei Cloud Computing Technologies Co., Ltd., Gui'an New District, Guizhou 550025 (CN)
(72) Inventor: LIN, Weibo, Guiyang, Guizhou 550025 (CN); LI, Jun, Guiyang, Guizhou 550025 (CN); JIANG, Shibiao, Guiyang, Guizhou 550025 (CN)
(74) Representative: Goddar, Heinz J.
(86) International application number: PCT/CN2024/142189
(87) International publication number: WO 2025/140271

(57) **Abstract**

This application discloses a cross-realm access control method based on a cloud management platform and a cloud management platform, to reduce operations performed by a tenant when the tenant formulates an access control policy, thereby improving convenience for the tenant and enhancing user experience. The method in this application includes: For a plurality of realms included in an organization of the tenant, when the tenant needs to perform access control on a first cloud service included in a first realm among the plurality of realms, the tenant inputs, via an access control interface provided by the cloud management platform, an access control policy formulated by the tenant for the first cloud service in the first realm. The cloud management platform receives the access control policy via the access control interface. If the access control policy indicates that an access authorization scope of the first cloud service included in the first realm is a second cloud service included in the organization of the tenant, the cloud management platform allows a second cloud service included in any realm in the organization of the tenant to access the first cloud service included in the first realm.

## Description

This application claims priorities to Chinese Patent Application No. 202311824996.3, filed with the China National Intellectual Property Administration on December 26, 2023 and entitled "CLOUD SERVICE MANAGEMENT METHOD BASED ON CLOUD MANAGEMENT PLATFORM, AND CLOUD MANAGEMENT PLATFORM", and to Chinese Patent Application No. 202410381646.2, filed with the China National Intellectual Property Administration on March 29, 2024 and entitled "CROSS-REALM ACCESS CONTROL METHOD BASED ON CLOUD MANAGEMENT PLATFORM, AND CLOUD MANAGEMENT PLATFORM", both of which are incorporated herein by reference in their entireties.

### TECHNICAL FIELD

Embodiments of this application relate to the field of cloud technologies, and in particular, to a cross-realm access control method based on a cloud management platform and a cloud management platform.

### BACKGROUND

In a public cloud system, each tenant has at least one realm (realm). Accordingly, a plurality of realms that belong to different tenants or the same tenant may be deployed in the system. Each realm may deploy one or more cloud services of the tenant to provide remote services for the tenant. Due to isolation between the plurality of realms, authorization from the tenant is required when cloud services in different realms need to perform cross-realm communication.

In conventional technologies, when another realm needs to access a realm of a tenant, the tenant may formulate an access control policy for the realm. The access control policy typically specifies, for a cloud service in the realm, which cloud services in which other realms are permitted to access the cloud service. Based on the access control policy, the corresponding cloud services included in those realms are deemed to have been authorized by the tenant, and therefore may access the cloud service in the realm, thereby implementing cross-realm communication.

However, when cloud services in newly added realms also need to access the cloud service in the realm, the tenant needs to modify the access control policy for the realm, so as to authorize the cloud services in the new realms. This increases the number of operations that the tenant needs to perform on the access control policy, causing inconvenience to the tenant and results in a poor user experience.

### SUMMARY

Embodiments of this application provide a cross-realm access control method based on a cloud management platform and a cloud management platform, to reduce operations performed by a tenant when the tenant formulates an access control policy, thereby improving convenience for the tenant and enhancing user experience.

A first aspect of embodiments of this application provides a cross-realm access control method based on a cloud management platform. The cloud management platform used to implement the method may manage an infrastructure that provides a cloud service, the infrastructure includes an organization of a tenant, and the organization of the tenant may include a plurality of realms of the tenant. One of the plurality of realms is referred to as a first realm in the following, and the first realm may include a first cloud service. The method includes:

For the plurality of realms included in the organization of the tenant, when the tenant needs to perform access control on the first cloud service included in the first realm, the cloud management platform may provide an access control interface for the tenant, and the tenant inputs, to the access control interface, an access control policy formulated by the tenant for the first cloud service included in the first realm. Therefore, the cloud management platform may receive, via the access control interface, the access control policy for the first cloud service included in the first realm. The access control policy may indicate an access authorization scope formulated by the tenant for the first cloud service included in the first realm.

After obtaining the access control policy, the cloud management platform may determine, based on the access control policy, the access authorization scope of the first cloud service included in the first realm. When the access authorization scope is a second cloud service included in the organization of the tenant, the cloud management platform may allow a second cloud service included in any realm in the organization of the tenant to access the first cloud service included in the first realm, to implement cross-realm communication. When the access authorization scope is a second cloud service included in a second realm (another one of the realms in the organization of the tenant), the cloud management platform may allow the second cloud service included in the second realm to access the first cloud service included in the first realm, to implement cross-realm communication.

It can be learned from the foregoing method that in the plurality of realms included in the organization of the tenant, the tenant may formulate the access control policy for the first cloud service included in the first realm, and send the access control policy to the cloud management platform. In this case, the cloud management platform may determine that the access authorization scope of the first cloud service included in the first realm is the second cloud service included in any realm in the organization of the tenant. This is equivalent to that the second cloud service included in any realm in the organization of the tenant is authorized by the tenant. Therefore, the cloud management platform allows the second cloud service included in any realm in the organization of the tenant to access the first cloud service included in the first realm. The access control policy indicates that the access authorization scope of the first cloud service included in the first realm is the entire organization of the tenant. In this case, once the organization of the tenant joins a new realm, a second microservice included in the new realm is automatically authorized by the tenant. Therefore, the cloud management platform may allow the second microservice included in the new realm to access the first cloud service included in the first realm. Correspondingly, once a realm exits the organization of the tenant, a second microservice included in the realm is no longer authorized by the tenant. Therefore, the cloud management platform no longer allows the second microservice included in the realm to access the first cloud service included in the first realm. In this way, the tenant needs to formulate the access control policy only once for the first cloud service included in the first realm, and does not need to formulate a new access control policy due to a change of a realm in the organization. This can reduce operations performed by the tenant, improve convenience for the tenant, and enhance user experience.

In a possible implementation, the access control policy includes an authorization identifier, an identifier of the organization, and an identifier of the second cloud service. In the foregoing implementation, the access control policy may include the identifier of the authorization, the identifier of the organization of the tenant (for example, an identity document (identity document, ID) of the organization of the tenant), and the identifier of the second cloud service (for example, an ID of the second cloud service). In this way, the cloud management platform may determine, based on the access control policy, that the access authorization scope of the first cloud service included in the first realm is the second cloud service included in any realm in the organization of the tenant.

In a possible implementation, the access control policy includes an authorization identifier, an identifier of the second realm, and an identifier of the second cloud service. In the foregoing implementation, the access control policy may include the identifier of the authorization, the identifier of the second realm (for example, an ID of the second realm), and the identifier of the second cloud service (for example, an ID of the second cloud service). In this way, the cloud management platform may determine, based on the access control policy, that the access authorization scope of the first cloud service included in the first realm is the second cloud service included in the second realm.

In a possible implementation, the access control policy further includes processing executable by the first cloud service, and that the cloud management platform allows the second cloud service included in any realm in the organization to access the first cloud service includes: The cloud management platform receives an access request sent by a second cloud service included in a third realm, and sends the access request to the first cloud service, where the access request indicates the first cloud service to perform the processing on target data, and the third realm is any realm in the organization; and the cloud management platform receives a processing result of the target data sent by the first cloud service, and sends the processing result to the second cloud service included in the third realm. In the foregoing implementation, the access control policy may further include the processing executable by the first cloud service and allowed by the tenant. It is assumed that any realm in the organization of the tenant is the third realm. When the second cloud service included in the third realm needs to access the first cloud service included in the first realm, the second cloud service included in the third realm may send the access request to the cloud management platform, where the access request is used to request the first cloud service included in the first realm to perform specific processing on the target data. The cloud management platform may then detect whether the second microservice included in the third realm is within the access authorization scope formulated by the tenant for the first cloud service included in the first realm. If the second microservice included in the third realm is within the access authorization scope formulated by the tenant for the first cloud service included in the first realm, the cloud management platform may detect whether processing indicated by the access request is processing that is executable by a first cloud instance included in the first realm and is allowed by the tenant. If the processing indicated by the access request is the processing executable by the first cloud instance and allowed by the tenant, the cloud management platform may forward the access request to the first cloud service included in the first realm. After obtaining the access request, the first cloud service included in the first realm may perform, on the target data, the processing indicated by the access request, to obtain the processing result of the target data, and return the processing result of the target data to the cloud management platform. After obtaining the processing result of the target data, the cloud management platform may forward the processing result of the target data to the second cloud service included in the third realm, to complete cross-realm communication.

In a possible implementation, the access control policy further includes processing executable by the first cloud service, and that the cloud management platform allows the second cloud service included in the second realm to access the first cloud service includes: The cloud management platform receives an access request sent by the second cloud service included in the second realm, and sends the access request to the first cloud service, where the access request indicates the first cloud service to perform the processing on target data; and the cloud management platform receives a processing result of the target data sent by the first cloud service, and sends the processing result to the second cloud service included in the second realm. In the foregoing implementation, the access control policy may further include the processing executable by the first cloud service and allowed by the tenant. When the second cloud service included in the second realm needs to access the first cloud service included in the first realm, the second cloud service included in the second realm may send the access request to the cloud management platform, where the access request is used to request the first cloud service included in the first realm to perform specific processing on the target data. The cloud management platform may then detect whether the second microservice included in the second realm is within the access authorization scope formulated by the tenant for the first cloud service included in the first realm. If the second microservice included in the second realm is within the access authorization scope formulated by the tenant for the first cloud service included in the first realm, the cloud management platform may detect whether processing indicated by the access request is processing that is executable by a first cloud instance included in the first realm and is allowed by the tenant. If the processing indicated by the access request is the processing executable by the first cloud instance and allowed by the tenant, the cloud management platform may forward the access request to the first cloud service included in the first realm. After obtaining the access request, the first cloud service included in the first realm may perform, on the target data, the processing indicated by the access request, to obtain the processing result of the target data, and return the processing result of the target data to the cloud management platform. After obtaining the processing result of the target data, the cloud management platform may forward the processing result of the target data to the second cloud service included in the second realm, to complete cross-realm communication.

In a possible implementation, the first cloud service is deployed in a cloud instance included in the first realm, and the cloud instance includes any one of the following: a physical server, a virtual machine, a container, a micro virtual machine, and a bare metal server.

In a possible implementation, the plurality of realms are located at a same site or different sites, and the site includes any one of the following: a region, an availability zone, a data center, an equipment room, and a cabinet.

A second aspect of embodiments of this application provides a cloud management platform. The management platform is configured to manage an infrastructure that provides a cloud service, the infrastructure includes an organization of a tenant, the organization includes a plurality of realms, and a first realm among the plurality of realms includes a first cloud service. The cloud management platform includes: a receiving module, configured to receive, via an access control interface, an access control policy sent by the tenant for the first cloud service; and an access control module, configured to: if the access control policy indicates that an access authorization scope of the first cloud service is a second cloud service included in the organization, allow a second cloud service included in any realm in the organization to access the first cloud service; or if the access control policy indicates that the access authorization scope is a second cloud service included in a second realm, allow the second cloud service included in the second realm to access the first cloud service, where the second realm is one of the plurality of realms.

In a possible implementation, the access control policy includes an authorization identifier, an identifier of the organization, and an identifier of the second cloud service.

In a possible implementation, the access control policy includes an authorization identifier, an identifier of the second realm, and an identifier of the second cloud service.

In a possible implementation, the access control policy further includes processing executable by the first cloud service, and the access control module is configured to: receive an access request sent by a second cloud service included in a third realm, and send the access request to the first cloud service, where the access request indicates the first cloud service to perform the processing on target data, and the third realm is any realm in the organization; and receive a processing result of the target data sent by the first cloud service, and send the processing result to the second cloud service included in the third realm.

In a possible implementation, the access control policy further includes processing executable by the first cloud service, and the access control module is configured to: receive an access request sent by the second cloud service included in the second realm, and send the access request to the first cloud service, where the access request indicates the first cloud service to perform the processing on target data; and receive a processing result of the target data and sent by the first cloud service, and send the processing result to the second cloud service included in the second realm.

In a possible implementation, the first cloud service is deployed in a cloud instance included in the first realm, and the cloud instance includes any one of the following: a physical server, a virtual machine, a container, a micro virtual machine, and a bare metal server.

In a possible implementation, the plurality of realms are located at a same site or different sites, and the site includes any one of the following: a region, an availability zone, a data center, an equipment room, and a cabinet.

A third aspect of embodiments of this application provides a compute device cluster. The compute device cluster includes at least one compute device, and each compute device includes a processor and a memory. The memory is configured to store instructions. The processor is configured to enable, according to the instructions, the compute device cluster to perform the method according to any one of the first aspect or the possible implementations of the first aspect.

A fourth aspect of embodiments of this application provides a computer storage medium. The computer storage medium stores one or more instructions. When the one or more instructions are executed by one or more computers, the one or more computers are enabled to perform the method according to any one of the first aspect or the possible implementations of the first aspect.

A fifth aspect of embodiments of this application provides a computer program product. The computer program product stores instructions. When the instructions are executed by a computer, the computer is enabled to perform the method according to any one of the first aspect or the possible implementations of the first aspect.

In embodiments of this application, the method includes: For a plurality of realms included in an organization of the tenant, when the tenant needs to perform access control on a first cloud service included in a first realm among the plurality of realms, the tenant may input, to an access control interface provided by the cloud management platform, an access control policy formulated by the tenant for the first cloud service in the first realm. Therefore, the cloud management platform may receive the access control policy via the access control interface. If the access control policy indicates that an access authorization scope of the first cloud service included in the first realm is a second cloud service included in the organization of the tenant, the cloud management platform allows a second cloud service included in any realm in the organization of the tenant to access the first cloud service included in the first realm. In the foregoing process, in the plurality of realms included in the organization of the tenant, the tenant may formulate the access control policy for the first cloud service included in the first realm, and send the access control policy to the cloud management platform. In this case, the cloud management platform may determine that the access authorization scope of the first cloud service included in the first realm is the second cloud service included in any realm in the organization of the tenant. This is equivalent to that the second cloud service included in any realm in the organization of the tenant is authorized by the tenant. Therefore, the cloud management platform allows the second cloud service included in any realm in the organization of the tenant to access the first cloud service included in the first realm. The access control policy indicates that the access authorization scope of the first cloud service included in the first realm is the entire organization of the tenant. In this case, once the organization of the tenant joins a new realm, a second microservice included in the new realm is automatically authorized by the tenant. Therefore, the cloud management platform may allow the second microservice included in the new realm to access the first cloud service included in the first realm. Correspondingly, once a realm exits the organization of the tenant, a second microservice included in the realm is no longer authorized by the tenant. Therefore, the cloud management platform no longer allows the second microservice included in the realm to access the first cloud service included in the first realm. In this way, the tenant needs to formulate the access control policy only once for the first cloud service included in the first realm, and does not need to formulate a new access control policy due to a change of a realm in the organization. This can reduce operations performed by the tenant, improve convenience for the tenant, and enhance user experience.

### BRIEF DESCRIPTION OF DRAWINGS

FIG. 1 is a diagram of a structure of a cloud service system according to an embodiment of this application;
FIG. 2 is another diagram of an organization of a tenant according to an embodiment of this application;
FIG. 3 is a schematic flowchart of a cross-realm access control method based on a cloud management platform according to an embodiment of this application;
FIG. 4 is a diagram of a tenant interface according to an embodiment of this application;
FIG. 5 is another diagram of a tenant interface according to an embodiment of this application;
FIG. 6 is another diagram of a cloud service system according to an embodiment of this application;
FIG. 7 is another diagram of a cloud service system according to an embodiment of this application;
FIG. 8 is a diagram of a structure of a cloud management platform according to an embodiment of this application;
FIG. 9 is a diagram of a structure of a compute device according to an embodiment of this application;
FIG. 10 is a diagram of a structure of a compute device cluster according to an embodiment of this application; and
FIG. 11 is a diagram in which computer devices in a computer cluster are connected through a network according to an embodiment of this application.

### DESCRIPTION OF EMBODIMENTS

Embodiments of this application provide a cross-realm access control method based on a cloud management platform and a cloud management platform, to reduce operations performed by a tenant when the tenant formulates an access control policy, thereby improving convenience for the tenant and improving user experience.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

In a public cloud system, each tenant may have at least one realm. Accordingly, a plurality of realms that belong to different tenants or the same tenant may be deployed in the system. Each realm may deploy one or more cloud services of the tenant to provide remote services for the tenant. Due to isolation between the plurality of realms, authorization from the tenant is required when cloud services in different realms need to perform cross-realm communication.

In conventional technologies, when another realm needs to access a realm of a tenant, the tenant may formulate an access control policy for the realm. The access control policy typically specifies, for a cloud service in the realm, which cloud services in which other realms are permitted to access the cloud service. Based on the access control policy, the corresponding cloud services included in those realms are deemed to have been authorized by the tenant, and therefore may access the cloud service in the realm, thereby implementing cross-realm communication.. For example, it is assumed that a public cloud system includes a realm A, a realm B, a realm C, and a realm D, where the realm A includes an object storage service, and the realm B and the realm C include audit services. In some scenarios, the audit services included in the realm B and the realm C need to write data to the object storage service in the realm A. In this case, a tenant to which the realm A belongs can formulate an access control policy for the realm A, and the access control policy allows the audit services included in the realm B and the realm C to access the object storage service included in the realm A. Therefore, the audit services included in the realm B and the realm C can access the object storage service included in the realm A to write data into the realm A.

However, when cloud services in newly added realms also need to access the cloud service in the realm, the tenant needs to modify the access control policy for the realm, so as to authorize the cloud services in the new realms. This increases the number of operations that the tenant needs to perform on the access control policy, causing inconvenience to the tenant and results in a poor user experience.. Still as in the foregoing example, if a realm E is newly added to the public cloud system, and the realm E includes an audit service. When the audit service included in the realm E needs to access the object storage service included in the realm A, the tenant needs to re-edit a new access control policy, causing operational inconvenience to the tenant.

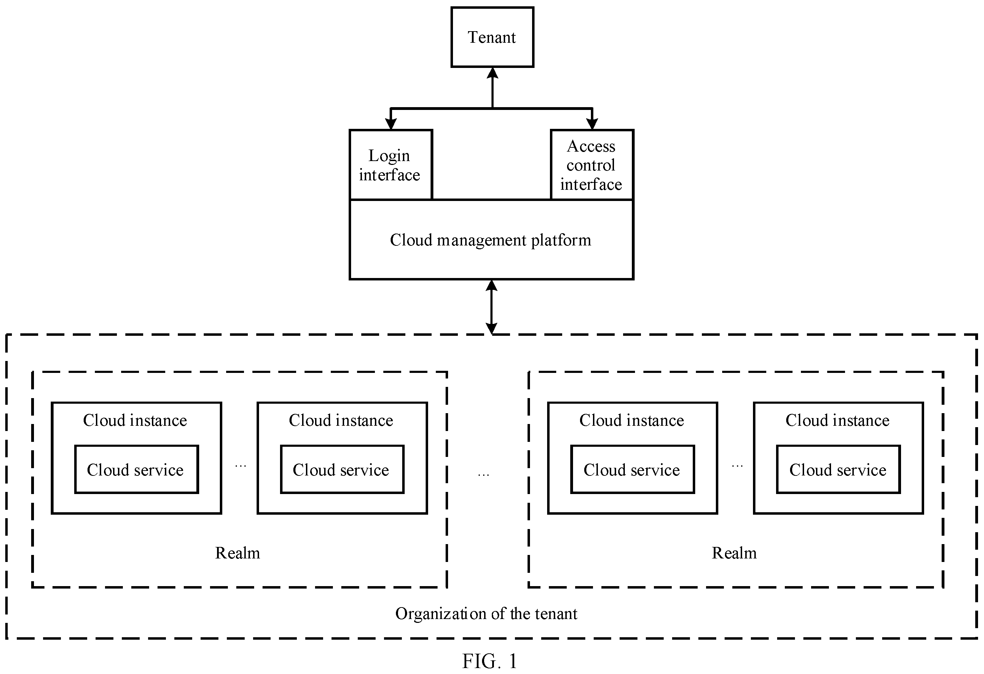

To resolve the foregoing problem, embodiments of this application provide a cross-realm access control method based on a cloud management platform. The method may be implemented by using a cloud service system (for example, a public cloud system). FIG. 1 is a diagram of a structure of a cloud service system according to an embodiment of this application. As shown in FIG. 1, the cloud service system includes an infrastructure that can provide a cloud service and a cloud management platform that manages the infrastructure. The following separately describes the cloud management platform and the infrastructure.

The cloud management platform may perform overall management of the infrastructure in the entire cloud service system (for example, in the infrastructure, an organization (organization) dedicated to a tenant is created for the tenant based on an instruction of the tenant; the organization of the tenant may include a plurality of realms, and each realm may include a plurality of cloud instances; and these cloud instances may be used to run a cloud service of the tenant and provide a remote service for the tenant). In addition, the cloud management platform may be open to a tenant outside the cloud service system and respond to a request of the tenant. For example, the cloud management platform may provide various interfaces such as a login interface and an access control interface for a client of the tenant (for example, a terminal device used by the tenant or a browser on the terminal device) to access. The cloud management platform may perform identity authentication on the client of the tenant through the login interface. After the identity authentication succeeds, the client of the tenant may be allowed to log in to the cloud management platform. For another example, the cloud management platform may further allow the client of the tenant to send, via the access control interface to the cloud management platform, an access control policy formulated by the tenant for a target cloud service included in a target realm. The access control policy may indicate an access authorization scope of the target cloud service. For example, the access authorization scope may be a remaining cloud service included in any realm in the entire organization of the tenant. For another example, the access authorization scope may be a remaining cloud service or remaining cloud services included in one or some of the realms in the organization of the tenant. In this case, the cloud management platform may allow, based on the access authorization scope indicated by the access control policy, the remaining cloud services included in all the realms or the remaining cloud services in some of the realms in the organization of the tenant to access the target cloud service in the target realm, to implement cross-realm communication. In addition, the access control policy may further indicate processing (operation) executable by the target cloud service on data. When the remaining cloud services included in all the realms or the remaining cloud services in some of the realms in the organization send an access request to the target cloud service in the target realm, the target cloud service performs the processing on the data indicated by the access request, and returns a corresponding processing result, to complete cross-realm communication.

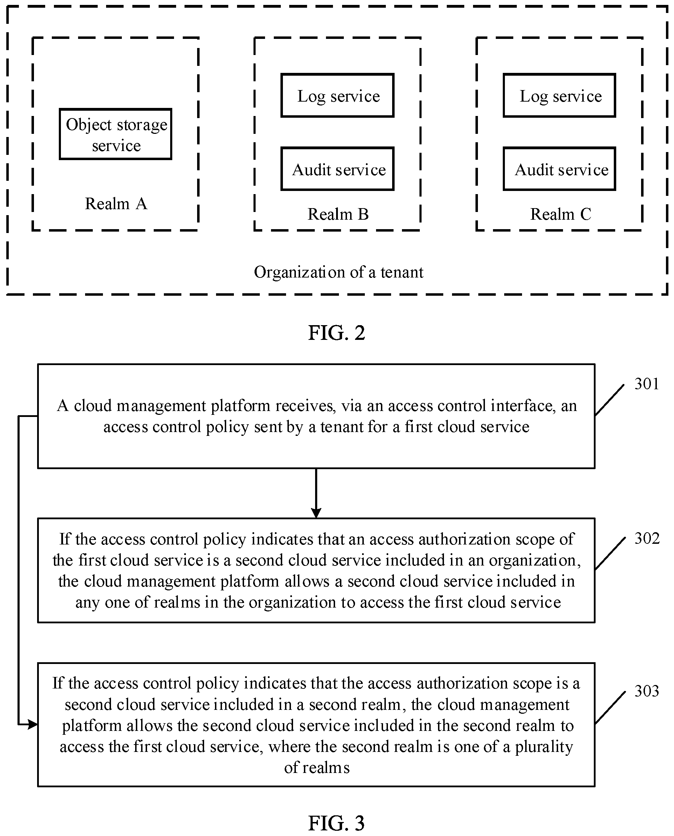

The infrastructure includes an organization of a tenant. The organization includes a plurality of realms, each realm includes a plurality of cloud instances, and each cloud instance runs a plurality of cloud services. It should be noted that cloud services running on different cloud instances may be the same or may be different. This is not limited herein. When a cloud service in a realm needs to access another cloud service in another realm, cross-realm communication is triggered (the two cloud services may be a same cloud service, or may be different cloud services, which is not limited herein). For example, as shown in FIG. 2 (where FIG. 2 is another diagram of an organization of a tenant according to an embodiment of this application), for the organization of the tenant, it is assumed that the organization includes a realm A, a realm B, and a realm C. The realm A includes a plurality of cloud instances, and each cloud instance runs an object storage service (object storage service, OBS). The realm B includes a plurality of cloud instances. Some of the cloud instances run an audit service, and some of the cloud instances run a log service. The realm C includes a plurality of cloud instances. Some of the cloud instances run an audit service, and some of the cloud instances run a log service. In this case, when the audit services in the realm B and the realm C need to write data into the object storage service in the realm A, cross-realm communication is triggered.

Further, in the organization of the tenant, the plurality of realms may be a plurality of accounts (accounts) of the tenant, or may be a plurality of projects (projects) of the tenant, or may be a plurality of subscriptions (subscriptions) of the tenant, or the like.

Further, in the organization of the tenant, any one of the cloud services included in any realm may be an application, a microservice, a plug-in, or the like developed by the tenant, or may be an application, a microservice, a plug-in, or the like provided by a cloud vendor (a developer of the cloud service system) for the tenant. This is not limited herein.

Further, in the organization of the tenant, any one of the cloud instances included in any realm may be presented in a plurality of manners. For example, the cloud instance may be a physical server selected by the cloud management platform. For another example, the cloud instance may be a bare metal server selected by the cloud management platform. For another example, the cloud instance may be a virtual machine (virtual machine, VM) created by the cloud management platform on the physical server by using a virtualization technology. For another example, the cloud instance may alternatively be a container (docker) created by the cloud management platform on the physical server by using the virtualization technology. For another example, the cloud instance may be a micro virtual machine (microVM) created by the cloud management platform on the physical server by using the virtualization technology.

Further, in the organization of the tenant, the plurality of realms may be deployed at a same site or different sites, and the site may be presented in a plurality of forms. For example, the site may be a region (region) in the infrastructure. For another example, the site may be an availability zone (availability zone) in the infrastructure. For another example, the site may be a data center (data center, DC) in the infrastructure. For another example, the site may be an equipment room (room) in the infrastructure. For another example, the site may be a cabinet in the infrastructure or the like.

It can be learned from the foregoing cloud service system that, in the organization of the tenant, the tenant may formulate the access control policy for the target cloud service included in the target realm, and send the access control policy to the cloud management platform. In this case, the cloud management platform may determine that the access authorization scope of the target cloud service is the remaining cloud service included in any realm in the organization of the tenant. This is equivalent to that the remaining cloud service included in any realm in the organization of the tenant is authorized by the tenant. Therefore, the cloud management platform allows the remaining cloud service included in any realm in the organization of the tenant to access the target cloud service in the target realm. The access control policy indicates that the access authorization scope of the target cloud service included in the target realm is the entire organization of the tenant. In this case, once the organization of the tenant joins a new realm, a remaining microservice included in the new realm are automatically authorized by the tenant. Therefore, the cloud management platform may allow the remaining microservice included in the new realm to access the target cloud service included in the target realm. Correspondingly, once a realm exits the organization of the tenant, a remaining microservice included in the realm is no longer authorized by the tenant. Therefore, the cloud management platform no longer allows the remaining microservice in the realm to access the target cloud service included in the target realm. In this way, the tenant needs to formulate the access control policy only once for the target cloud service included in the target realm, and does not need to formulate a new access control policy due to a change of a realm in the organization. This can reduce operations performed by the tenant, improve convenience for the tenant, and enhance user experience. To further understand the process, the following further describes the process with reference to FIG. 3. FIG. 3 is a schematic flowchart of a cross-realm access control method based on a cloud management platform according to an embodiment of this application. As shown in FIG. 3, the method is implemented by using the cloud service system shown in FIG. 1. The cloud service system includes an infrastructure that provides a cloud service and a cloud management platform that manages the infrastructure. The infrastructure includes an organization of a tenant, and the organization of the tenant includes a plurality of realms. In the following, one of the plurality of realms is referred to as a first realm (namely, the foregoing target realm). The first realm may include a first cloud service (namely, the foregoing target cloud service). The method includes the following steps.

301: The cloud management platform receives, via an access control interface, an access control policy sent by the tenant for the first cloud service.

In this embodiment, for the plurality of realms included in the organization of the tenant, when the tenant needs to perform access control on the first cloud service included in the first realm, the cloud management platform may provide the access control interface (for example, an access control policy input field of a tenant interface) for a client of the tenant, and the tenant inputs, through the client of the tenant to the access control interface, the access control policy formulated by the tenant for the first cloud service included in the first realm. Therefore, the cloud management platform may receive, via the access control interface, the access control policy for the first cloud service included in the first realm. The access control policy may indicate an access authorization scope formulated by the tenant for the first cloud service. For example, the access authorization scope may be a second cloud service included in the organization of the tenant. For another example, the access authorization scope may alternatively be a second cloud service included in another one of the realms, namely, a second realm, in the organization of the tenant.

Specifically, the access control policy may be presented in a plurality of manners as follows.
(1) The access control policy may include an authorization identifier (where the identifier indicates to authorize a principal within a specific scope), an identifier of the organization of the tenant (where the identifier indicates that the authorized scope is the organization of the tenant), and an identifier of the second cloud service (where the identifier indicates that the principal within the authorized scope is the second cloud service included in the organization of the tenant). In addition, the access control policy may further include processing executable by the first cloud service (that is, processing executable by the first cloud service for a second cloud service when the second cloud service included in any realm in the organization accesses the first cloud service included in the first realm). In this way, the cloud management platform may determine, based on the access control policy, that the access authorization scope of the first cloud service included in the first realm is the second cloud service included in any realm in the organization of the tenant.

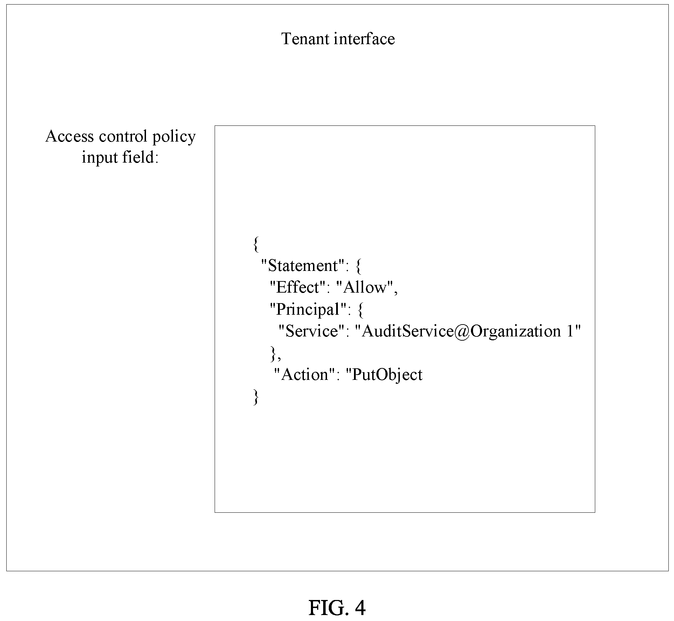

For example, as shown in FIG. 4 (where FIG. 4 is a diagram of a tenant interface according to an embodiment of this application), it is assumed that an organization 1 of the tenant includes an account 1 (namely, a realm 1), an account 2 (namely, a realm 2), and an account 3 (namely, a realm 3). The account 1 includes an object storage service, and the account 2 and the account 3 include an audit service and a log service. When the tenant needs to perform access control on the object storage service included in the account 1, the tenant may log in to the cloud management platform. The cloud management platform may provide the tenant interface for the tenant. The tenant interface includes the access control policy input field, so that the tenant can input, in the access control policy input field, an access control policy for the object storage service included in the account 1.

```
          {
           "Statement": {
            "Effect": "Allow",//Authorize a principal within a specific scope
            "Principal": {
             "Service": "AuditService@Organization 1"//The authorized scope is the
 organization 1, and the authorized principal within the scope is the audit service
            },
            "Action": "PutObject"//Allow the audit service in the organization 1 to write data
 into the object storage service in the account 1
          }
```

(2) The access control policy may include an authorization identifier (where the identifier indicates to authorize a principal within a specific scope), an identifier of the second realm (where the identifier indicates that the authorized scope is one of the realms, namely, the second realm, in the organization of the tenant), and an identifier of the second cloud service (where the identifier indicates that the principal within the authorized scope is the second cloud service included in the second realm). In addition, the access control policy may further include processing executable by the first cloud service (that is, processing executable by the first cloud service for the second cloud service when the second cloud service included in the second realm accesses the first cloud service included in the first realm). In this way, the cloud management platform may determine, based on the access control policy, that the access authorization scope of the first cloud service included in the first realm is the second cloud service included in the second realm.

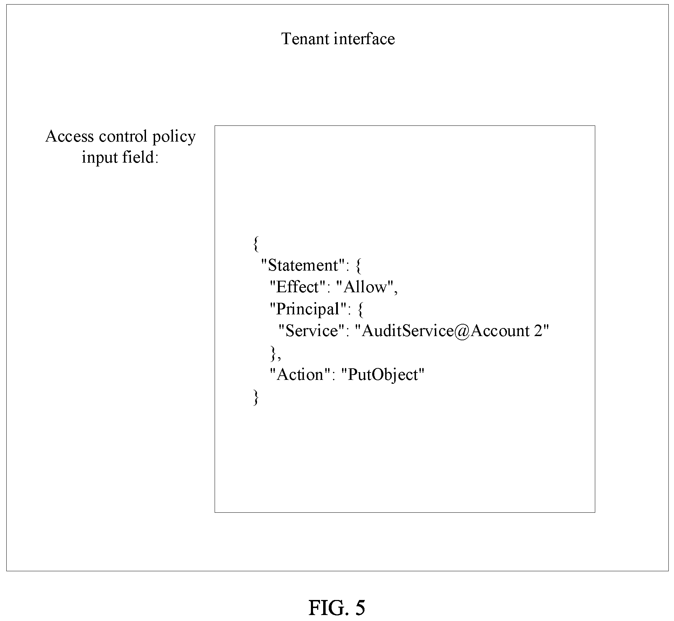

For example, as shown in FIG. 5 (where FIG. 5 is another diagram of a tenant interface according to an embodiment of this application), it is assumed that an organization 1 of the tenant includes an account 1 (namely, a realm 1), an account 2 (namely, a realm 2), and an account 3 (namely, a realm 3). The account 1 includes an object storage service, and the account 2 and the account 3 include an audit service and a log service. When the tenant needs to perform access control on the object storage service included in the account 1, the tenant may log in to the cloud management platform. The cloud management platform may provide the tenant interface for the tenant. The tenant interface includes the access control policy input field, so that the tenant can input, in the access control policy input field, an access control policy for the object storage service included in the account 1.

```
          {
           "Statement": {
            "Effect": "Allow",//Authorize a principal within a specific scope
            "Principal": {
             "Service": "AuditService@Account 2"//The authorized scope is the account 2, and
             the authorized principal within the scope is the audit service
            },
            "Action": "PutObject"//Allow the
audit service in the account 2 to write data into the
 object storage service in the account 1
          }
```

302: If the access control policy indicates that the access authorization scope of the first cloud service is the second cloud service included in the organization, the cloud management platform allows the second cloud service included in any realm in the organization to access the first cloud service.

After obtaining the access control policy, the cloud management platform may determine, based on the access control policy, the access authorization scope of the first cloud service included in the first realm. When the access authorization scope is the second cloud service included in the organization of the tenant, the cloud management platform may allow the second cloud service included in any realm in the organization of the tenant to access the first cloud service included in the first realm, to implement cross-realm communication.

Specifically, the cloud management platform may implement cross-realm communication in the following manners:
After obtaining the access control policy, based on the access control policy, the cloud management platform may determine that the access authorization scope formulated by the tenant for the first cloud service included in the first realm is the second cloud service included in any realm in the organization of the tenant, and may further determine the processing executable by the first cloud service and allowed by the tenant.

It is assumed that any realm in the organization of the tenant is a third realm. When a second cloud service included in the third realm needs to access the first cloud service included in the first realm, the second cloud service included in the third realm may send an access request to the cloud management platform, where the access request is used to request the first cloud service included in the first realm to perform specific processing on target data. The cloud management platform may then detect whether the second microservice included in the third realm is within the access authorization scope formulated by the tenant for the first cloud service included in the first realm. If the second microservice included in the third realm is within the access authorization scope formulated by the tenant for the first cloud service included in the first realm, the cloud management platform may detect whether processing indicated by the access request is processing executable by a first cloud instance included in the first realm and allowed by the tenant. If the processing indicated by the access request is the processing executable by the first cloud instance and allowed by the tenant, the cloud management platform may forward the access request to the first cloud service included in the first realm.

After obtaining the access request, the first cloud service included in the first realm may perform, on the target data, the processing indicated by the access request, to obtain a processing result of the target data, and return the processing result of the target data to the cloud management platform. After obtaining the processing result of the target data, the cloud management platform may forward the processing result of the target data to the second cloud service included in the third realm. In this way, cross-realm communication between the first cloud service included in the first realm and the second cloud service in the third realm is successfully completed.

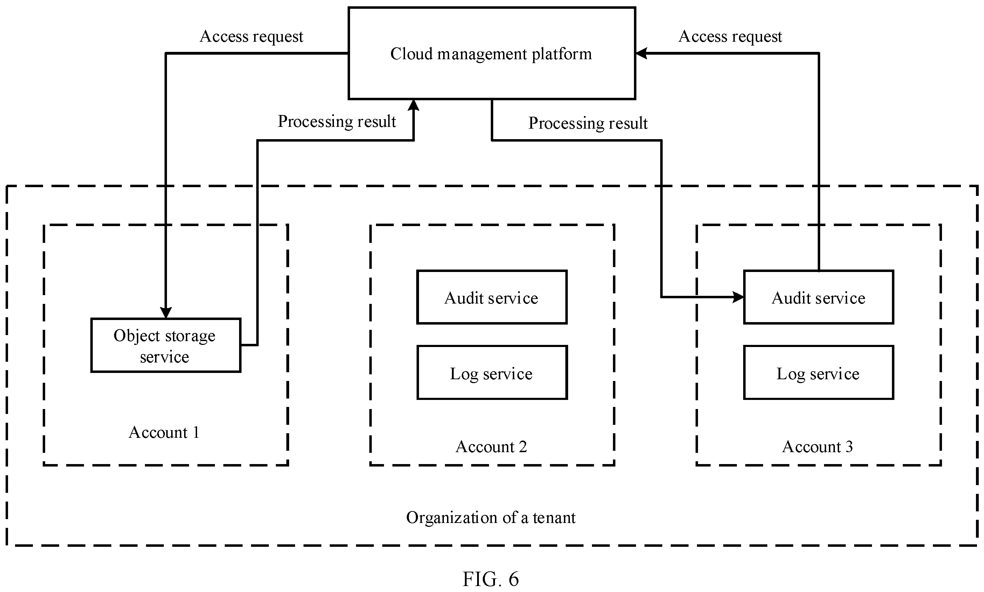

Still as in the foregoing example, as shown in FIG. 6 (where FIG. 6 is another diagram of a cloud service system according to an embodiment of this application, and FIG. 6 is drawn based on FIG. 4), when the audit service in the account 3 needs to write data to the object storage service in the account 1, the audit service in the account 3 may send an access request to the cloud management platform. If the cloud management platform determines that the audit service in the account 3 is within an authorized principal of the object storage service in the account 1, and processing (that is, writing the data) indicated by the access request is the processing allowed by the tenant, the cloud management platform sends the access request to the object storage service in the account 1, so that the object storage service in the account 1 can store the data. This is equivalent to writing the data into the object storage service in the account 1. Then, the object storage service in the account 1 returns the processing result of the data to the cloud management platform. In this case, the cloud management platform may send the processing result of the data to the audit service in the account 3, and the audit service in the account 3 may determine, based on the processing result of the data, that the data has been successfully written into the object storage service in the account 1.

303: If the access control policy indicates that the access authorization scope is the second cloud service included in the second realm, the cloud management platform allows the second cloud service included in the second realm to access the first cloud service, where the second realm is one of the plurality of realms.

After obtaining the access control policy, the cloud management platform may determine, based on the access control policy, the access authorization scope of the first cloud service included in the first realm. When the access authorization scope is the second cloud service included in the second realm (another one of the realms in the organization of the tenant), the cloud management platform may allow the second cloud service included in the second realm to access the first cloud service included in the first realm, to implement cross-realm communication.

Specifically, the cloud management platform may implement cross-realm communication in the following manners:

After obtaining the access control policy, based on the access control policy, the cloud management platform may determine that the access authorization scope formulated by the tenant for the first cloud service included in the first realm is the second cloud service included in the second realm in the organization of the tenant, and may further determine the processing executable by the first cloud service and allowed by the tenant.

When the second cloud service included in the second realm needs to access the first cloud service included in the first realm, the second cloud service included in the second realm may send the access request to the cloud management platform, where the access request is used to request the first cloud service included in the first realm to perform specific processing on the target data. The cloud management platform may then detect whether the second microservice included in the second realm is within the access authorization scope formulated by the tenant for the first cloud service included in the first realm. If the second microservice included in the second realm is within the access authorization scope formulated by the tenant for the first cloud service included in the first realm, the cloud management platform may detect whether processing indicated by the access request is processing executable by a first cloud instance included in the first realm and allowed by the tenant. If the processing indicated by the access request is the processing executable by the first cloud instance and allowed by the tenant, the cloud management platform may forward the access request to the first cloud service included in the first realm.

After obtaining the access request, the first cloud service included in the first realm may perform, on the target data, the processing indicated by the access request, to obtain a processing result of the target data, and return the processing result of the target data to the cloud management platform. After obtaining the processing result of the target data, the cloud management platform may forward the processing result of the target data to the second cloud service included in the second realm. In this way, cross-realm communication between the first cloud service included in the first realm and the second cloud service in the second realm is successfully completed.

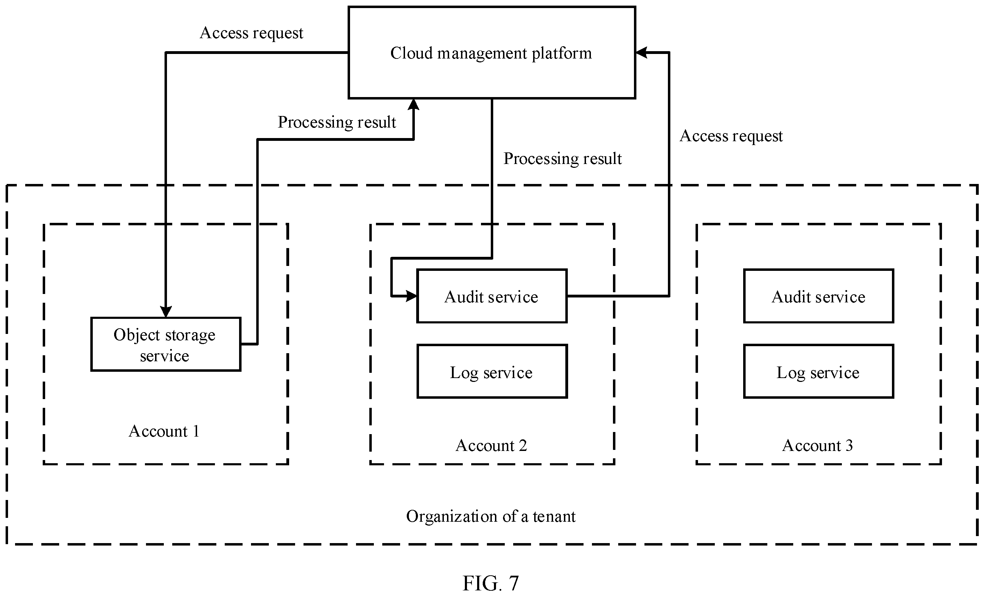

Still as in the foregoing example, as shown in FIG. 7 (where FIG. 7 is another diagram of a cloud service system according to an embodiment of this application, and FIG. 7 is drawn based on FIG. 5), when the audit service in the account 2 needs to write data to the object storage service in the account 1, the audit service in the account 2 may send an access request to the cloud management platform. If the cloud management platform determines that the audit service in the account 2 is within an authorized principal of the object storage service in the account 1, and processing (that is, writing the data) indicated by the access request is the processing allowed by the tenant, the cloud management platform sends the access request to the object storage service in the account 1, so that the object storage service in the account 1 can store the data. This is equivalent to writing the data into the object storage service in the account 1. Then, the object storage service in the account 1 returns the processing result of the data to the cloud management platform. In this case, the cloud management platform may send the processing result of the data to the audit service in the account 2, and the audit service in the account 2 may determine, based on the processing result of the data, that the data has been successfully written into the object storage service in the account 1.

In embodiments of this application, the method includes: For a plurality of realms included in an organization of the tenant, when the tenant needs to perform access control on a first cloud service included in a first realm among the plurality of realms, the tenant may input, to an access control interface provided by the cloud management platform, an access control policy formulated by the tenant for the first cloud service in the first realm. Therefore, the cloud management platform may receive the access control policy via the access control interface. If the access control policy indicates that an access authorization scope of the first cloud service included in the first realm is a second cloud service included in the organization of the tenant, the cloud management platform allows a second cloud service included in any realm in the organization of the tenant to access the first cloud service included in the first realm. In the foregoing process, in the plurality of realms included in the organization of the tenant, the tenant may formulate the access control policy for the first cloud service included in the first realm, and send the access control policy to the cloud management platform. In this case, the cloud management platform may determine that the access authorization scope of the first cloud service included in the first realm is the second cloud service included in any realm in the organization of the tenant. This is equivalent to that the second cloud service included in any realm in the organization of the tenant is authorized by the tenant. Therefore, the cloud management platform allows the second cloud service included in any realm in the organization of the tenant to access the first cloud service included in the first realm. The access control policy indicates that the access authorization scope of the first cloud service included in the first realm is the entire organization of the tenant. In this case, once the organization of the tenant joins a new realm, a second microservice included in the new realm is automatically authorized by the tenant. Therefore, the cloud management platform may allow the second microservice included in the new realm to access the first cloud service included in the first realm. Correspondingly, once a realm exits the organization of the tenant, a second microservice included in the realm is no longer authorized by the tenant. Therefore, the cloud management platform no longer allows the second microservice included in the realm to access the first cloud service included in the first realm. In this way, the tenant needs to formulate the access control policy only once for the first cloud service included in the first realm, and does not need to formulate a new access control policy due to a change of a realm in the organization. This can reduce operations performed by the tenant, improve convenience for the tenant, and enhance user experience.

Further, in this embodiment of this application, for the first cloud service included in the first realm, the second microservices in all the realms or the second microservice in the second realm in the organization can access the first cloud service included in the first realm only when being authorized by the tenant. In this way, realms of some attackers can be prevented from randomly accessing the first cloud service included in the first realm, helping ensure data security of the tenant.

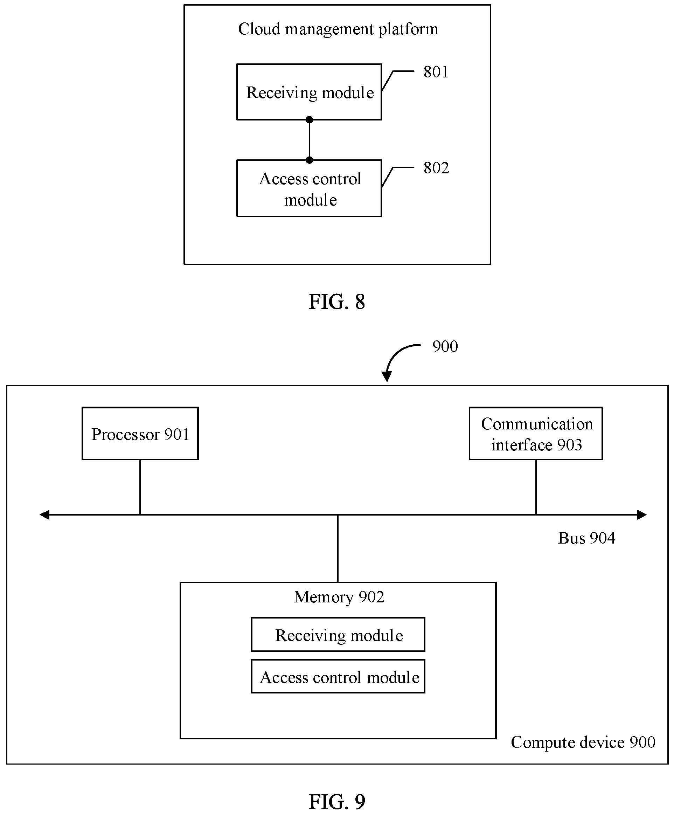

The foregoing describes in detail the cross-realm access control method based on the cloud management platform provided in embodiments of this application. The following describes a cloud management platform provided in embodiments of this application. FIG. 8 is a diagram of a structure of a cloud management platform according to an embodiment of this application. As shown in FIG. 8, the cloud management platform is configured to manage an infrastructure that provides a cloud service. The infrastructure includes an organization of a tenant, the organization includes a plurality of realms, and a first realm among the plurality of realms includes a first cloud service. The cloud management platform includes:
a receiving module 801, configured to receive, via an access control interface, an access control policy sent by the tenant for the first cloud service. For example, the receiving module 801 may be configured to implement step 301 in the embodiment shown in FIG. 3; and
an access control module 802, configured to: if the access control policy indicates that an access authorization scope of the first cloud service is a second cloud service included in the organization, allow a second cloud service included in any realm in the organization to access the first cloud service; or if the access control policy indicates that the access authorization scope is a second cloud service included in a second realm, allow the second cloud service included in the second realm to access the first cloud service, where the second realm is one of the plurality of realms. For example, the access control module 802 may be configured to implement step 302 or step 303 in the embodiment shown in FIG. 3.

In a possible implementation, the access control policy includes an authorization identifier, an identifier of the organization, and an identifier of the second cloud service.

In a possible implementation, the access control policy includes an authorization identifier, an identifier of the second realm, and an identifier of the second cloud service.

In a possible implementation, the access control policy further includes processing executable by the first cloud service, and the access control module is configured to: receive an access request sent by a second cloud service included in a third realm, and send the access request to the first cloud service, where the access request indicates the first cloud service to perform the processing on target data, and the third realm is any realm in the organization; and receive a processing result of the target data sent by the first cloud service, and send the processing result to the second cloud service included in the third realm.

In a possible implementation, the access control policy further includes processing executable by the first cloud service, and the access control module is configured to: receive an access request sent by the second cloud service included in the second realm, and send the access request to the first cloud service, where the access request indicates the first cloud service to perform the processing on target data; and receive a processing result of the target data sent by the first cloud service, and send the processing result to the second cloud service included in the second realm.

In a possible implementation, the first cloud service is deployed in a cloud instance included in the first realm, and the cloud instance includes any one of the following: a physical server, a virtual machine, a container, a micro virtual machine, and a bare metal server.

In a possible implementation, the plurality of realms are located at a same site or different sites, and the site includes any one of the following: a region, an availability zone, a data center, an equipment room, and a cabinet.

It should be noted that, content such as information exchange between the modules/units of the foregoing apparatus and an implementation process is based on the same concept as the method embodiment of this application, and produces the same technical effects as those of the method embodiment of this application. For specific content, refer to the foregoing descriptions in the method embodiment of embodiments of this application. Details are not described herein again.

FIG. 9 is a diagram of a structure of a compute device according to an embodiment of this application. As shown in FIG. 9, the compute device 900 (which may be configured to present the foregoing cloud management platform) includes a processor 901, a memory 902, a communication interface 903, and a bus 904. The processor 901, the memory 902, and the communication interface 903 are coupled through a bus (not marked in the figure). The memory 902 stores instructions. When the executable instructions in the memory 902 are executed, the compute device 900 performs the method performed by the cloud management platform in the foregoing method embodiments.

The compute device 900 may be one or more integrated circuits configured to implement the foregoing method, for example, one or more application specific integrated circuits (application specific integrated circuits, ASICs), one or more microprocessors (digital signal processors, DSPs), one or more field programmable gate arrays (field programmable gate arrays, FPGAs), or a combination of at least two of these integrated circuit forms. For another example, when units in an apparatus is implemented in a form of scheduling a program by a processing element, the processing element may be a general-purpose processor, for example, a central processing unit (central processing unit, CPU) or another processor that may invoke the program. For still another example, the units may be integrated and implemented in a form of system-on-a-chip (system-on-a-chip, SOC).

The processor 901 may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The memory 902 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 902 stores executable program code, and the processor 901 executes the executable program code to separately implement functions of the foregoing modules such as the receiving module and the access control module, to implement the foregoing cross-realm access control method based on the cloud management platform. In other words, the memory 902 stores instructions for performing the foregoing cross-realm access control method based on the cloud management platform.

The communication interface 903 uses a transceiver module, for example but not limited to, a network interface card or a transceiver, to implement communication between the compute device 900 and another device or a communication network.

In addition to a data bus, the bus 904 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus or UB), a compute express link (compute express link, CXL), cache coherent interconnect for accelerators (cache coherent interconnect for accelerators, CCIX), or the like. Buses may be classified into an address bus, a data bus, a control bus, and the like.

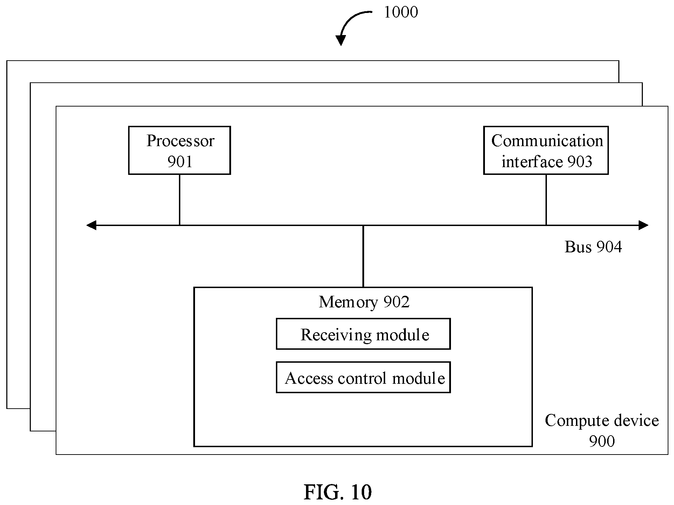

FIG. 10 is a diagram of a structure of a compute device cluster according to an embodiment of this application. As shown in FIG. 10, the compute device cluster 1000 includes at least one compute device 900.

As shown in FIG. 10, the compute device cluster 1000 includes at least one compute device 900. A memory 902 in one or more compute devices 900 in the compute device cluster 1000 may store same instructions for performing the foregoing cross-realm access control method based on the cloud management platform.

In some possible implementations, the memory 902 in the one or more compute devices 900 in the compute device cluster 1000 may alternatively separately store some instructions for performing the foregoing cross-realm access control method based on the cloud management platform. In other words, a combination of one or more compute devices 900 may jointly perform the foregoing cross-realm access control method based on the cloud management platform.

It should be noted that memories 902 in different compute devices 900 in the compute device cluster 1000 may store different instructions for performing some functions of the cloud management platform respectively. In other words, the instructions stored in the memories 902 in the different compute devices 900 may be used to implement functions of one or more of modules such as a receiving module and an access control module.

In some possible implementations, the one or more compute devices 900 in the compute device cluster 1000 may be connected through a network. The network may be a wide area network, a local area network, or the like.

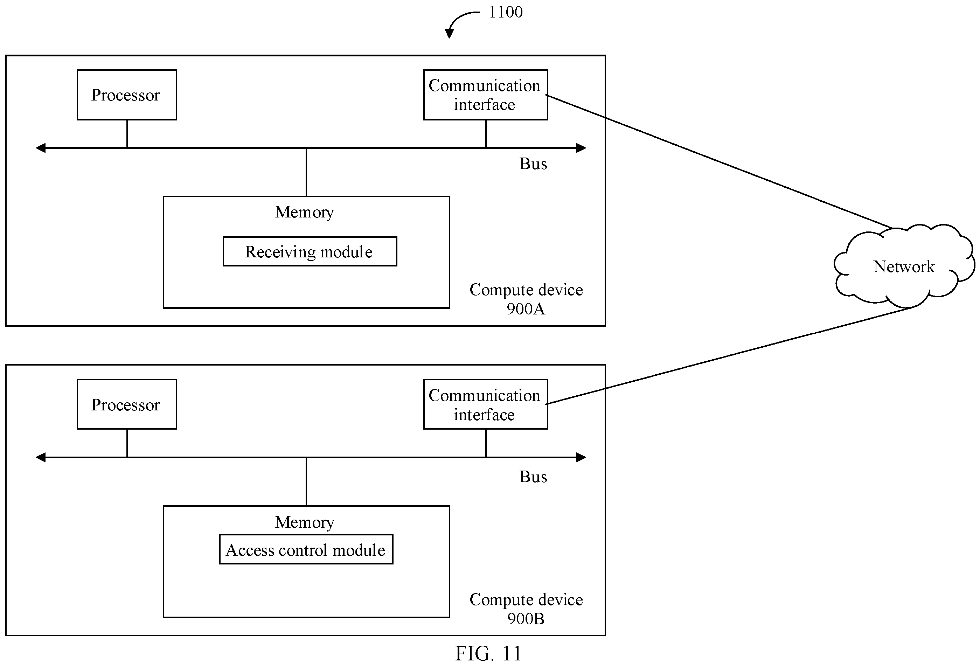

FIG. 11 is a diagram in which computer devices in a computer cluster are connected through a network according to an embodiment of this application. As shown in FIG. 11, the compute device 900A and the compute device 900B are connected through the network. Specifically, the compute devices are connected to the network through communication interfaces in the compute devices.

In a possible implementation, a memory in the compute device 900A stores instructions for performing a function of a module such as a receiving module. In addition, a memory in the compute device 900B stores instructions for performing a function of a module such as an access control module.

It should be understood that a function of the compute device 900A shown in FIG. 11 may alternatively be completed by a plurality of compute devices. Similarly, a function of the compute device 900B may alternatively be completed by a plurality of compute devices.

An embodiment of this application further relates to a computer storage medium. The computer-readable storage medium stores a program used for signal processing. When the program is run on a computer, the computer is enabled to perform the steps performed by the cloud management platform in the embodiment shown in FIG. 3.

An embodiment of this application further relates to a computer program product. The computer program product stores instructions. When the instructions are executed by a computer, the computer is enabled to perform the steps performed by the cloud management platform in the embodiment shown in FIG. 3.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to the existing technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A cross-realm access control method based on a cloud management platform, wherein the cloud management platform is configured to manage an infrastructure that provides a cloud service, the infrastructure comprises an organization of a tenant, the organization comprises a plurality of realms, a first realm among the plurality of realms comprises a first cloud service, and the method comprises:
receiving, by the cloud management platform via an access control interface, an access control policy sent by the tenant for the first cloud service; and
if the access control policy indicates that an access authorization scope of the first cloud service is a second cloud service comprised in the organization, allowing, by the cloud management platform, a second cloud service comprised in any realm in the organization to access the first cloud service; or
if the access control policy indicates that the access authorization scope is a second cloud service comprised in a second realm, allowing, by the cloud management platform, the second cloud service comprised in the second realm to access the first cloud service, wherein the second realm is one of the realms in the organization.

2. The method according to claim 1, wherein the access control policy comprises an authorization identifier, an identifier of the organization, and an identifier of the second cloud service.

3. The method according to claim 1, wherein the access control policy comprises an authorization identifier, an identifier of the second realm, and an identifier of the second cloud service.

4. The method according to claim 2, wherein the access control policy further comprises processing executable by the first cloud service, and allowing, by the cloud management platform, the second cloud service comprised in any realm in the organization to access the first cloud service comprises:
receiving, by the cloud management platform, an access request sent by a second cloud service comprised in a third realm, and sending the access request to the first cloud service, wherein the access request indicates the first cloud service to perform the processing on target data, and the third realm is any realm in the organization; and
receiving, by the cloud management platform, a processing result of the target data sent by the first cloud service, and sending the processing result to the second cloud service comprised in the third realm.

5. The method according to claim 3, wherein the access control policy further comprises processing executable by the first cloud service, and allowing, by the cloud management platform, the second cloud service comprised in the second realm to access the first cloud service comprises:
receiving, by the cloud management platform, an access request sent by the second cloud service comprised in the second realm, and sending the access request to the first cloud service, wherein the access request indicates the first cloud service to perform the processing on target data; and
receiving, by the cloud management platform, a processing result of the target data sent by the first cloud service, and sending the processing result to the second cloud service comprised in the second realm.

6. The method according to any one of claims 1 to 5, wherein the first cloud service is deployed in a cloud instance comprised in the first realm, and the cloud instance comprises any one of the following: a physical server, a virtual machine, a container, a micro virtual machine, and a bare metal server.

7. The method according to any one of claims 1 to 6, wherein the plurality of realms are located at a same site or different sites, and the site comprises any one of the following: a region, an availability zone, a data center, an equipment room, and a cabinet.

8. A cloud management platform, wherein the cloud management platform is configured to manage an infrastructure that provides a cloud service, the infrastructure comprises an organization of a tenant, the organization comprises a plurality of realms, a first realm among the plurality of realms comprises a first cloud service, and the cloud management platform comprises:
a receiving module, configured to receive, via an access control interface, an access control policy sent by the tenant for the first cloud service; and
an access control module, configured to:
if the access control policy indicates that an access authorization scope of the first cloud service is a second cloud service comprised in the organization, allow a second cloud service comprised in any realm in the organization to access the first cloud service; or
if the access control policy indicates that the access authorization scope is a second cloud service comprised in a second realm, allow the second cloud service comprised in the second realm to access the first cloud service, wherein the second realm is one of the realms in the organization.

9. The cloud management platform according to claim 8, wherein the access control policy comprises an authorization identifier, an identifier of the organization, and an identifier of the second cloud service.

10. The cloud management platform according to claim 8, wherein the access control policy comprises an authorization identifier, an identifier of the second realm, and an identifier of the second cloud service.

11. The cloud management platform according to claim 9, wherein the access control policy further comprises processing executable by the first cloud service, and the access control module is configured to:
receive an access request sent by a second cloud service comprised in a third realm, and send the access request to the first cloud service, wherein the access request indicates the first cloud service to perform the processing on target data, and the third realm is any realm in the organization; and
receive a processing result of the target data sent by the first cloud service, and send the processing result to the second cloud service comprised in the third realm.

12. The cloud management platform according to claim 10, wherein the access control policy further comprises processing executable by the first cloud service, and the access control module is configured to:
receive an access request sent by the second cloud service comprised in the second realm, and send the access request to the first cloud service, wherein the access request indicates the first cloud service to perform the processing on target data; and
receive a processing result of the target data sent by the first cloud service, and send the processing result to the second cloud service comprised in the second realm.

13. The cloud management platform according to any one of claims 8 to 12, wherein the first cloud service is deployed in a cloud instance comprised in the first realm, and the cloud instance comprises any one of the following: a physical server, a virtual machine, a container, a micro virtual machine, and a bare metal server.

14. The cloud management platform according to any one of claims 8 to 13, wherein the plurality of realms are located at a same site or different sites, and the site comprises any one of the following: a region, an availability zone, a data center, an equipment room, and a cabinet.

15. A compute device cluster, wherein the compute device cluster comprises at least one compute device, and each compute device comprises a processor and a memory, wherein
the memory is configured to store instructions; and
the processor is configured to enable, based on the instructions, the compute device cluster to perform the method according to any one of claims 1 to 7.

16. A computer storage medium, wherein the computer storage medium stores one or more instructions, and when the one or more instructions are executed by one or more computers, the one or more computers are enabled to perform the method according to any one of claims 1 to 7.

17. A computer program product, wherein the computer program product stores instructions, and when the instructions are executed by a computer, the computer is enabled to perform the method according to any one of claims 1 to 7.
